(19) Europäisches Patentamt
European Patent Office
Office européen des brevets

(11) EP 4 525 067 A1

(12) EUROPEAN PATENT APPLICATION
published in accordance with Art. 153(4) EPC

(43) Date of publication:
19.03.2025 Bulletin 2025/12

(21) Application number: 23850312.2

(22) Date of filing: 24.07.2023

(51) International Patent Classification (IPC):
H01M 4/13 (2010.01)    H01M 4/04 (2006.01)
H01M 4/139 (2010.01)    H01M 10/0525 (2010.01)
H01M 4/02 (2006.01)

(52) Cooperative Patent Classification (CPC):
H01M 4/02; H01M 4/04; H01M 4/13; H01M 4/139;
H01M 10/0525

(86) International application number:
PCT/KR2023/010631

(87) International publication number:
WO 2024/029805 (08.02.2024 Gazette 2024/06)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 05.08.2022 KR 20220097936

(71) Applicant: SK On Co., Ltd.
Seoul 03161 (KR)

(72) Inventors:
• KIM, Jaeyoun
Daejeon 34124 (KR)
• YANG, Jungmin
Daejeon 34124 (KR)

(74) Representative: Prüfer & Partner mbB
Patentanwälte · Rechtsanwälte
Sohnckestraße 12
81479 München (DE)

(54) **ELECTRODE FOR SECONDARY BATTERY, METHOD FOR MANUFACTURING SAME, AND SECONDARY BATTERY INCLUDING SAME**

(57) Provided are an electrode for a secondary battery, a method for manufacturing the same, and a secondary battery including the same. The present disclosure may improve surface quality of the electrode, increase productivity, and also improve life characteristics simultaneously, by controlling drying rates of a center part and a side part based on a width direction of the electrode similarly to solve problems such as a rise, cracks, or wrinkles of the side part which occur on a surface of an electrode during drying. The present example embodiment may provide an electrode for a secondary battery including: a current collector; and an electrode active material layer placed on at least one surface of the current collector, wherein the following Relation 1 is satisfied:

[Relation 1]

$$Sa \leq 10.0$$

wherein Sa is an average surface roughness value (μm)

of a side part based on a width direction of the electrode active material layer.

[FIG. 1]

coating running direction

EP 4 525 067 A1

## Description

[Technical Field]

The present disclosure relates to an electrode for a secondary battery, a method for manufacturing the same, and a secondary battery including the same.

[Background Art]

Recently, as an issue of global warming arises, a demand for environmentally friendly technologies is rapidly increasing in response thereto. In particular, as a technical demand for electric vehicles and energy storage systems (ESS) increases, a demand for a lithium secondary battery in the spotlight as an energy storage device is exploding. Therefore, studies to improve life characteristics of the lithium secondary battery are in progress.

In general, an electrode for a lithium secondary battery is manufactured by applying an electrode slurry prepared by mixing and dispersing an electrode active material, a conductive material, and a binder in a solvent on a current collector and then drying. When the applied electrode slurry is dried, a side part based on a width direction is dried first, which causes a difference in drying rates between a center part and a side part based on the width direction of the applied electrode slurry. As a result, after drying the electrode slurry, surface quality problems such as a rise of the side part of an electrode or formation of cracks or wrinkles on the surface of the electrode side part may occur. In addition, when an electrode having a surface quality problem is assembled into a battery, a lithium salt is precipitated by cracks or wrinkles occurring on the surface of the electrode, which may deteriorate battery life characteristics.

Thus, development of an electrode for a secondary battery which improves the problems described above occurring by a drying process during an electrode manufacturing process is demanded.

[Related Art Document]

[Patent Document]

(Patent Document 1) Korean Patent Laid-Open Publication No. 10-2017-0100377 (publication date: September 4, 2017)

**[Disclosure]**

[Technical Problem]

An object of the present disclosure is to provide an electrode for a secondary battery which may solve problems in which a side part of an electrode rises or cracks or wrinkles are formed on the surface of the side part of an electrode by a drying process during a process for manufacturing an electrode, a method for manufacturing the same, and a secondary battery including the same.

Another object of the present disclosure is to provide an electrode for a secondary battery which may improve surface quality of an electrode and increase productivity while simultaneously improving life characteristics of a battery, and a method for manufacturing the same, by solving the above problems.

The electrode for a secondary battery of the present disclosure may be widely applied to electric vehicles, battery charging stations, and other green technology fields such as solar power generations and wind power generations using batteries. In addition, an electrode for a secondary battery of the present disclosure may be used in eco-friendly electric vehicles, hybrid vehicles, and the like for preventing climate change by suppressing air pollution and greenhouse gas emissions.

[Technical Solution]

In one general aspect, an electrode for a secondary battery includes: a current collector; and an electrode active material layer placed on at least one surface of the current collector, wherein the following Relation 1 is satisfied:

$$[\text{Relation 1}]$$

$$Sa \leq 10.0$$

wherein Sa is an average surface roughness value ($\mu$m) of a side part based on a width direction of the electrode active material layer.

In an example embodiment, the number of cracks per unit area of 10 cm$^2$ of the side part based on the width direction of the electrode active material layer may be less than 5.

In an example embodiment, a maximum long diameter of the crack in the side part based on the width direction of the electrode active material layer may be less than 100 mm.

In another general aspect, a method for manufacturing an electrode for a secondary battery includes: a) applying an electrode slurry on at least one surface of a current collector; and b) drying the applied electrode slurry, wherein the following Relation 2 is satisfied:

$$[Relation\ 2]$$

$$We/Wc\ <\ 1$$

wherein Wc is a solid content of the electrode slurry applied to a center part, and We is a solid content of the electrode slurry applied to a side part, based on a width direction of the applied electrode slurry.

In an example embodiment, the We/Wc value of Relation 2 may be 0.8 or more and less than 1.

In an example embodiment, the process a) may include:

a1) preparing a first electrode slurry having a first solid content and a second electrode slurry having a second solid content lower than the first solid content; and

a2) applying the first electrode slurry to the center part and applying the second electrode slurry to the side part, based on the width direction, on at least one surface of the current collector.

In an example embodiment, the process a2) may be performed by:

applying the first electrode slurry to the center part using a slot die and applying the second electrode slurry to the side part using a mini-slot die, based on the width direction, on at least one surface of the current collector; or

applying the second electrode slurry to the side part and applying the first electrode slurry to the center part, using a dual-slot die coater, based on the width direction, on at least one surface of the current collector.

In an example embodiment, a width of the side part may be 15% or less based on an overall width length of the applied electrode slurry.

In an example embodiment, the electrode slurries applied to the center part and the side part may have the same composition.

In an example embodiment, the electrode slurry applied to the center part may have a viscosity Vc of 1,000 to 10,000 cP.

In an example embodiment, the electrode slurry applied to the side part may have a viscosity Ve of 1,000 to 6,000 cP.

In an example embodiment, the electrode slurries applied to the center part and the side part may be applied at the same thickness.

In still another general aspect, a secondary battery includes: the electrode according to the example embodiment described above; a separator; and an electrolyte solution.

[Advantageous Effects]

The present disclosure may improve surface quality of the electrode and increase productivity, by controlling drying rates of a center part and a side part based on a width direction of an electrode similarly to solve problems such as a rise, cracks, or wrinkles of the side part which occur on a surface of an electrode during drying.

In addition, the present disclosure may improve life characteristics of a battery including the electrode, by solving the problems occurring on the side part described above.

[Description of Drawings]

The above and other objects, features and advantages of the present disclosure will become apparent from the following description of preferred embodiments given in conjunction with the accompanying drawings, in which:

FIG. 1 is a drawing showing an electrode slurry applied on a current collector according to an example embodiment.
FIG. 2 is a cross section A-A' of FIG. 1.

FIGS. 3 and 4 are drawings for describing surface quality problems such as a rise, cracks, or wrinkles of an electrode side part which occur when drying rates of the center part and the side part based on a width direction of the electrode are different. FIG. 3 is a drawing showing an electrode before drying the electrode slurry applied on the current collector. FIG. 4 is a drawing showing an electrode after drying the electrode slurry applied on the current collector.

FIG. 5 is a drawing for confirming occurrence of cracks on the side part of the electrode of Example 1.

FIG. 6 is a drawing for confirming occurrence of cracks on the side part of the electrode of Example 2.

FIG. 7 is a drawing for confirming occurrence of cracks on the side part of the electrode of Comparative Example 1.

[Detailed Description of Main Elements]

1: Electrode

10: Electrode coated part

20: Electrode uncoated part

11: Center part

12: Side part

[Best Mode]

Advantages and features of the present disclosure and methods to achieve them will become apparent from the following example embodiments described in detail with reference to the accompanying drawings. However, the present disclosure is not limited to the example embodiments disclosed below, but will be implemented in various forms. The example embodiments of the present disclosure make the present disclosure thorough and are provided so that those skilled in the art can easily understand the scope of the present disclosure. Therefore, the present disclosure will be defined by the scope of the appended claims.

Unless otherwise defined herein, all terms used herein (including technical and scientific terms) may have the meaning that is commonly understood by those skilled in the art. Throughout the present specification, unless explicitly described to the contrary, "comprising" any elements will be understood to imply further inclusion of other elements rather than the exclusion of any other elements. In addition, unless explicitly described to the contrary, a singular form includes a plural form herein.

In the present specification, it will be understood that when an element such as a layer, film, region, or substrate is referred to as being "on" or "above" another element, it can be "directly on" the other element or intervening elements may also be present.

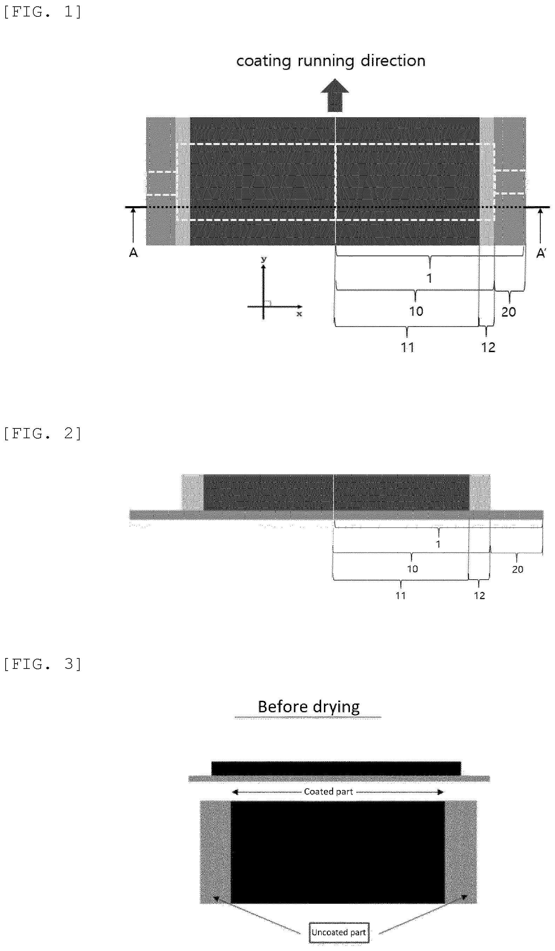

Hereinafter, the present disclosure will be described in detail with reference to FIGS. 1 and 2. However, it is only illustrative and the present disclosure is not limited to the specific embodiments which are illustratively described in the present disclosure.

Attached FIGS. 1 and 2 are drawings showing the electrode according to an example embodiment. An area marked with a dotted line may refer to a part which becomes an electrode when assembling an electrode later. An area marked with a dotted line in a coated part 10 becomes a part which is a current collector-electrode active material layer later, and an area marked with a dotted line in an uncoated part 20 may become a part which is an electrode tab later through a notching process and the like.

Unless otherwise particularly stated in the present specification, a "length direction" refers to a direction (y-axis direction) parallel to a coating running direction of an electrode during a manufacturing process of an electrode, as shown in FIG. 1, and a "width direction" refers to a direction (x-axis direction) perpendicular to the coating running direction, as shown in FIG. 1.

A "side part" of an electrode in the present specification may refer to a side area 12 shown in FIGS. 1 and 2, and refers to an end part in the width direction of an electrode coated part 10 in an electrode uncoated part 20 side of an electrode 1. A "center part" in the present specification may refer to a center area 11 shown in FIGS. 1 and 2, and refers to an area excluding the side part 12 based on the width direction in the coated part 10 of the electrode.

In the present specification, a width of the side part 12 may refer to a section of 15% or less of the overall width length of the electrode coated part 10, when one electrode slurry is uniformly applied on one surface of a current collector. When two different electrode slurries are applied to the center part and the side part, respectively, it may refer to a section on which an electrode slurry other than the electrode slurry applied to the center part is applied to the side part. A width of the side part 12 in an example embodiment may be 1 to 20 mm, or 5 to 20 mm in a specific example embodiment, but is not limited thereto.

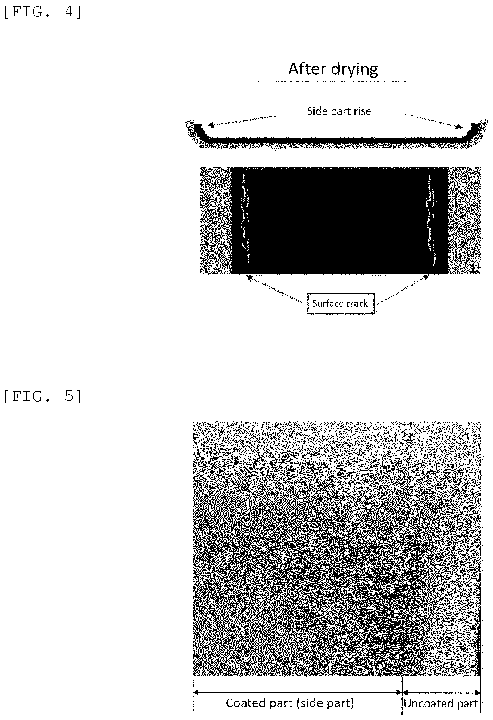

Referring to FIGS. 3 and 4, in a conventional electrode for a secondary battery, when the applied electrode slurry is dried, in the case of a side part adjacent to the uncoated part, thermal conductivity of a current collector may act as an additional heat source so that drying may be accelerated to cause a difference in drying rates between the center part and the side part based on the width direction. Due to the difference in the drying rates, problems in which the side part of the electrode rises or cracks or winkles are formed on the surface of the electrode side part may arise after drying, as shown in FIG. 4.

According to an example embodiment of the present disclosure for solving the problems, an electrode for a secondary battery including: a current collector; and an electrode active material layer placed on at least one surface of the current collector, wherein the following Relation 1 is satisfied, may be provided:

$$[Relation\ 1]$$

$$Sa \leq 10.0$$

wherein Sa is an average surface roughness value ($\mu$m) of a side part based on a width direction of the electrode active material layer.

In an example embodiment, the average surface roughness Sa may be an average of surface roughness values measured in an observation area of width 20 mm $\times$ length 20 mm at 5 arbitrary points in the side part based on the width direction of the electrode active material layer, using a surface roughness measurement tool in a confocal microscope, but is not limited thereto.

In an example embodiment, the average surface roughness Sa value may be 10.0 $\mu$m or less, 8.0 $\mu$m or less, 6.0 $\mu$m or less, 5.0 $\mu$m or less and more than 0 um, 1.0 $\mu$m or more, 1.5 $\mu$m or more, or a value between the numerical values. The lower the average surface roughness Sa value is, the better the surface quality and the life characteristics of an electrode are, and thus, though it is not particularly limited, in a specific example embodiment, the average surface roughness Sa value may be more than 0 $\mu$m and 10.0 $\mu$m or less, more than 0 $\mu$m and 8.0 $\mu$m or less, more than 0 $\mu$m and 6.0 $\mu$m or less, more than 0 $\mu$m and 5.0 $\mu$m or less, or 1.0 $\mu$m or more and 5.0 $\mu$m or less.

The electrode satisfying Relation 1 of an example embodiment does not have problems such as a rise of the side part of the electrode active material layer or formation of cracks or wrinkles on the surface of the side part of the electrode active material layer after drying the electrode slurry, and may have improved surface quality and improved life characteristics.

In an example embodiment, the number of cracks per unit area of 10 cm$^2$ of the side part based on the width direction of the electrode active material layer may be less than 5, and in a specific example embodiment, the number of cracks may be 3, 2, 1, or 0. The unit area of 10 cm$^2$ is an area of the width a and the length b of the side part and may be calculated as a product of a and b, and the length b may be determined dependently on the width a of the side part. For example, when the width a of the side part is 20 mm, the length b may be 50 mm.

In an example embodiment when the number of cracks is at least one, a maximum long diameter of the crack in the side part based on the width direction of the electrode active material layer may be less than 100 mm. Herein, the "long diameter" of the crack refers to a length in a longest axis direction on the crack, and "maximum long diameter" refers to the largest diameter value among the long diameter values of the cracks. In a specific example embodiment in which the surface quality of the electrode is improved and the life characteristics thereof are further improved, the maximum long diameter of the crack may be less than 80 mm, less than 50 mm, less than 30 mm, less than 10 mm, or less than 5 mm. Herein, the lower limit of the maximum long diameter of the crack may be 0.1 mm or 1 mm, but is not limited thereto.

The electrode according to the example embodiments has an effect of having excellent surface quality and significantly improved life characteristics by improving problems such as the rise, cracks, or winkles of the side part of the electrode active material layer which occur during manufacture of the electrode.

A method for manufacturing an electrode as a means for providing an electrode having excellent surface quality and life characteristics according to the example embodiments is not particularly limited, but the manufacturing method of the following example embodiment may be used as a means for providing an electrode according to the example embodiments.

In a conventional electrode for a secondary battery, when the applied electrode slurry is dried, in the case of a side part adjacent to the uncoated part, thermal conductivity of a current collector may act as an additional heat source so that drying may be accelerated to cause a difference in drying rates between the center part and the side part based on the width direction of the electrode, as shown in FIGS. 3 and 4. Thus, problems in which the side part of the electrode rises or cracks or winkles are formed on the surface of the electrode side part may arise after drying, as shown in FIG. 4.

An example embodiment of the present disclosure for solving the problems may provide a method for manufacturing a battery for a secondary battery including: a) applying an electrode slurry on at least one surface of a current collector; and b) drying the applied electrode slurry, wherein the following Relation 2 is satisfied:

[Relation 2]

$$We/Wc < 1$$

wherein Wc is a solid content (wt%) of the electrode slurry applied to a center part, and We is a solid content (wt%) of the electrode slurry applied to a side part, based on a width direction of the applied electrode slurry.

According to the example embodiment, when the We/Wc value range is satisfied, an area having a high solid content is formed on the center part and an area having a low solid content is formed on the side part, based on the width direction, and thus, a difference in the drying rates of the electrode slurry applied to the center part and the side part may be decreased. Accordingly, the present disclosure solves the problems such as the rise of the electrode side part or formation of cracks or wrinkles on the surface of the electrode side part which occur due to the difference in drying rates and may provide an electrode for a secondary battery having significantly improved surface quality.

Considering that the drying rate of the side part is higher than the drying rate of the center part, in a specific example embodiment for decreasing a difference in the drying rates of the electrode slurry applied to the side part and the center part, the We/Wc value of Relation 2 may be 0.8 or more, 0.85 or more and less than 1, 0.99 or less, 0.98 or less, 0.95 or less, or a value between the numerical values.

The lower limit is not particularly limited, but the difference in the drying rates of the electrode slurry applied to the side part and the center part may be further decreased by controlling the We/Wc value to an appropriate level or higher, so that the surface quality, productivity, and life characteristics of the electrode may be further improved. In a more specific example embodiment, considering the above effect, the We/Wc value of Relation 2 may be 0.8 or more and less than 1, or 0.85 or more and less than 1.

In a more specific example embodiment for further improving the surface quality, productivity, and life characteristics of the electrode by further decreasing the difference in the drying rates of the electrode slurry applied to the side part and the center part in a narrow side part width as well as in a broad side part width, the We/Wc value of Relation 2 may be 0.8 or more and 0.95 or less, or 0.85 or more and 0.95 or less.

The means for achieving Relation 2 of the example embodiment is not particularly limited, and any method known in the art may be variously used.

In an example embodiment, the process a) may include: a1) preparing an electrode slurry; and a2) applying the prepared electrode slurry to at least one surface of a current collector. Hereinafter, the example embodiment of each process will be described.

In an example embodiment, the process a1) may be a process of preparing an electrode slurry including an electrode active material, a binder, a conductive material, and a solvent. In an example embodiment, a solid content in the electrode slurry may be 40 wt% or more, in a specific example embodiment, 40 to 65 wt% or 40 to 60 wt%, based on the total weight of the electrode slurry.

In an example embodiment, the electrode active material may be used without limitation as long as it is an electrode active material commonly used in a secondary battery. As a non-limiting example of a negative electrode active material, any one or two or more of a carbon-based negative electrode active material, a silicon-based negative electrode active material, and a mixture thereof may be included. The carbon-based negative electrode active material may be any one or two or more selected from artificial graphite, natural graphite, and hard carbon, as a non-limiting example. The silicon-based negative electrode active material may be any one or two or more selected from Si, $SiO_x$ (0<x<2), a Si-Q alloy (Q is an element selected from the group consisting of alkali metals, alkaline earth metals, Group 13 elements, Group 14 elements, Group 15 elements, Group 16 elements, transition metals, rare earth elements, and a combination thereof, but not Si), and a Si-carbon composite, as a non-limiting example. A non-limiting example of the positive electrode active material may be a composite oxide of any one or two or more metals of cobalt, manganese, and nickel with lithium. The electrode active material may be replaced with other constituent elements unless it is beyond the scope of the present disclosure.

In an example embodiment, the binder may be used without limitation as long as it is a binder which serves to attach the electrode active material to the current collector well while attaching electrode active material particles well to each other. A non-limiting example of the binder may be an aqueous binder, specifically, styrene-butadiene rubber (SBR), acrylated styrene-butadiene rubber, polyvinyl alcohol, sodium polyacrylate, a copolymer of propylene and an olefin having 2 to 8 carbon atoms, a copolymer of (meth)acrylic acid and (meth)acrylic acid alkyl ester, or a combination thereof. The binder may be replaced with other constituent elements unless it is beyond the scope of the present disclosure.

In a specific example embodiment, when the aqueous binder is used, the aqueous binder is good for binding an electrode active material to the current collector well without affecting the viscosity of a slurry, but since the slurry is easily gelled due to the electrode active material and the conductive material which are fine particles, a thickener for imparting viscosity to the slurry to make a more stable slurry may be further included. As a non-limiting example, the thickener may be one or a mixture of two or more of cellulose-based compounds, specifically, carboxymethyl cellulose, hydroxypropyl methyl cellulose, methyl cellulose, alkali metal salts thereof, and the like. As the alkali metal, Na, K, or Li may be used. The thickener may be replaced with other constituent elements unless it is beyond the scope of the present disclosure.

In an example embodiment, the solvent may be used without limitation as long as it is a solvent commonly used in an electrode slurry. As a non-limiting example, a solvent for a negative electrode may be any one solvent alone of water, pure water, deionized water, distilled water, ethanol, isopropanol, methanol, acetone, n-propanol, and t-butanol, or a mixed solvent of two or more of the solvents. As a non-limiting example, a solvent for a positive electrode may be any one solvent alone of amine-based solvents such as N,N-dimethylaminopropylamine and diethyltriamine; ether-based solvents such as ethylene oxide and tetrahydrofuran; ketone-based solvents such as methyl ethyl ketone; ester-based solvents such as methyl acetate; and aprotic polar solvents such as dimethylacetamide and N-methyl-2-pyrrolidone, or a mixed solvent of two or more of the solvents. The solvent may be replaced with other constituent elements unless it is beyond the scope of the present disclosure.

In an example embodiment, the conductive material is used for imparting conductivity to the electrode, and is not particularly limited as long as it is an electron-conductive material which does not cause a chemical change in the battery. As a non-limiting example, the conductive material may include any one or two or more of natural graphite, artificial graphite, carbon black, acetylene black, ketjen black, carbon fibers, and carbon nanotubes. The conductive material may be replaced with other constituent elements unless it is beyond the scope of the present disclosure.

In an example embodiment, following the process a1), a2) applying the prepared electrode slurry to at least one surface of the current collector may be performed.

In an example embodiment, the current collector may be any one of a copper foil, a nickel foil, a stainless steel foil, a titanium foil, a nickel foam, a copper foam, and a polymer substrate coated with a conductive metal, but is not limited thereto.

The application may be performed by any application method which is generally known to be used for applying a liquid phase to form a film. According to a non-limiting example, the application may be any one or a combination of two or more of spray coating, dip coating, spin coating, gravure coating, slot die coating, doctor blade coating, roll coating, inkjet printing, lexography printing, screen printing, electrostatic hydrodynamic printing, micro contact printing, imprinting, reverse offset printing, bar-coating, and gravure offset printing.

In an example embodiment, the viscosity Vc of the electrode slurry applied to the center part may be 1,000 cP or more, 1,500 cP or more, 2,000 cP or more, 2,500 cP or more, 3,000 cP or more and 10,000 cP or less, 9,000 cP or less, 8,000 cP or less, 7,000 cP or less, 6,000 cP or less, 5,000 cP or less, or a value between the numerical values, and in a specific example embodiment, the Vc may be 1,000 to 10,000 cP, 2,000 to 8,000 cP, or 3,000 to 6,000 cP.

In an example embodiment, the viscosity Ve of the electrode slurry applied to the side part may be 1,000 cP or more, 1,500 cP or more and 6,000 cP or less, 5,000 cP or less, 4,500 cP or less, 4,000 cP or less, 3,500 cP or less, or a value between the numerical values, and in a specific example embodiment, the Ve may be 1,000 to 6,000 cP, 1,500 to 5,000 cP, or 1,500 to 4,500 cP.

The viscosities Vc and Ve of the electrode slurry refer to viscosities when the electrode slurry is applied on the current collector and values measured as a shear rate of $1$ s$^{-1}$ using a Brookfield rotational viscometer under room temperature and normal pressure conditions, and their tolerance is $\pm 100$ cP.

When the electrode slurry satisfying the viscosity range is applied to the center part and the side part as in the example embodiment, ease of application operation of the slurry may be improved and also the electrode active material layer having a uniform thickness may be formed.

In an example embodiment, the electrode slurries applied to the center part or the side part may be applied at the same thickness. When the electrode slurries is applied at the same thickness on the center part and the side part as in the example embodiment, the electrode active material layer having a uniform thickness may be formed even after drying the electrode slurry and the electrode active material layer may have a uniform composition.

Without particular limitations, as a non-limiting example of a means for better achieving Relation 2, a method according to the following example embodiment may be selectively used. In a specific example embodiment, the process a) may include: a1) preparing a first electrode slurry having a first solid content and a second electrode slurry having a second solid content lower than the first solid content; and a2) applying the first electrode slurry to the center part and applying the second electrode slurry to the side part, based on the width direction, on at least one surface of a current collector.

By performing the processes a1) and a2) of the example embodiment, the We/Wc value range may be better achieved, and thus, the difference in the drying rates of the electrode slurry applied to the center part and the side part may be further decreased. As a result, problems such as a rise, cracks, or wrinkles of the side part which occur on the surface of an electrode during drying may be solved to further improve the surface quality of an electrode, further increase productivity, and also, further improve life characteristics.

In the example embodiment, the first electrode slurry and the second electrode slurry may have the same solid content (electrode active material, binder, and conductive material) and different slurry solid contents (wt%) excluding the solvent.

In addition, in the example embodiment, the first electrode slurry and the second electrode slurry may be simultaneously or sequentially applied on the current collector, and the application order is not particularly limited. Though the application method is not particularly limited, the following application method may be optionally used.

As a first embodiment, in the process a2), the first electrode slurry may be applied to the center part using a slot die and the second electrode slurry may be applied to the side part using a mini-slot die, based on the width direction, on at least one surface of the current collector. The first electrode slurry and the second electrode slurry may be simultaneously or sequentially applied, and are not particularly limited.

As a second embodiment, in the process a2), a discharge port facing the center part based on the width direction may be blocked with a shim and the second electrode slurry may be applied to the side part, and a discharge port facing the side part based on the width direction may be blocked with a shim and the first electrode slurry may be applied to the center part, using a dual-slot die coater including a lower slot and an upper slot, on at least one surface of the current collector. The first electrode slurry and the second electrode slurry may be simultaneously or sequentially applied, and are not particularly limited. The first electrode slurry may be applied through the lower slot or the upper slot, and the second electrode slurry may be applied through the other slot, and the present disclosure is not particularly limited thereto.

Between the first embodiment and the second embodiment, when two electrode slurries having different solid contents are coated on the center part using a slot die and on the side part using a mini-slot die separately as in the first embodiment, the solid content may be more precisely controlled, and thus, it may be favorable to secure the surface quality, productivity, and life characteristics of the electrode to be desired.

In an example embodiment, after the process a) described above, b) drying the applied electrode slurry may be further performed.

Without particular limitations, in an example embodiment, the drying temperature may be 60°C or higher, 80°C or higher, 100°C or higher and 150°C or lower, 140°C or lower, 130°C or lower, or a value between the numerical values, and in a specific example embodiment, may be 60 to 150°C, 80 to 140°C, or 100 to 130°C.

Without particular limitations, in an example embodiment, the drying time may be more than 0 seconds, 30 seconds or more, 40 seconds or more, 1 minutes or more, 5 minutes or more and 4 minutes or less, 3 minutes or less, 2 minutes or less, or a value between the numerical values, and in a specific example embodiment, may be more than 0 seconds and 5 minutes or less, 30 seconds or more and 4 minutes or less, or 40 seconds or more and 3 minutes or less.

According to an example embodiment, after completing the drying of the electrode slurry, rolling to an appropriate density may be performed to manufacture an electrode in which the electrode active material layer is formed on at least one surface of the current collector. Herein, any electrode rolling method known in the art may be applied as the rolling conditions such as rolling density without limitation, and is not particularly limited.

In addition, the present disclosure provides a secondary battery including: the electrode of the example embodiment; a separator; and an electrolyte solution. In an example embodiment, the electrode may be a positive electrode or a negative electrode depending on the type of the electrode active material layer included in the electrode active material layer, and since the same description as the above description may be applied, detailed description will be omitted for convenience.

In an example embodiment, the separator may be any separator known in the art, and is not particularly limited. A non-limiting example of the separator substrate may include a porous substrate formed of glass fiber, polyester, polyethylene, polypropylene, polytetrafluoroethylene, or a combination thereof, may be a non-woven or woven form, and may be used selectively as a single-layer or a multi-layer structure. In addition, in a specific example embodiment, the separator may be a separator in which an inorganic particle layer is formed on the separator substrate, for the purpose of improving heat resistance.

In a specific embodiment, the electrolyte solution may include a nonaqueous organic solvent and an electrolytic salt. A non-limiting example of the nonaqueous organic solvent may include ethylene carbonate (EC), propylene carbonate (PC), dimethyl carbonate (DMC), diethyl carbonate (DEC), ethyl methyl carbonate (EMC), 1,2-dimethoxyethene (DME), $\gamma$-butyrolactone (BL), tetrahydrofuran (THF), 1,3-dioxolane (DOL), diethyl ether (DEE), methyl formate (MF), methyl propionate (MP), sulfolane (S), dimethyl sulfoxide (DMSO), acetonitrile (AN), or a mixture thereof. As a non-limiting example of the electrolytic salt, when the electrolytic metal is lithium, the electrolytic salt may be $LiPF_6$, $LiBF_4$, LiTFSI, $LiSbF_6$, $LiAsF_6$, $LiClO_4$, $LiCF_3SO_3$, $Li(CF_3SO_2)_2N$, $LiC_4F_9SO_3$, $LiSbF_6$, $LiAlO_4$, $LiAlCl_4$, $LiN(C_xF_{2x+1}SO_2)(C_yF_{2y+1}SO_2)$ (provided that x and y are natural numbers), LiCl, LiI, or a mixture thereof. The organic solvent and the electrolytic salt may be replaced with other constituent elements unless they are beyond the scope of the present disclosure.

In addition, in a specific example embodiment, the electrolyte solution may further include a solvent or an additive known for improving charge and discharge properties, flame retardant properties, and the like, if necessary.

In the method for manufacturing a secondary battery according to an example embodiment, the battery may be manufactured by laminating the manufactured electrodes and a separator to form an electrode assembly, placing the manufactured electrode assembly in a cylindrical battery case or angled battery case, and then injecting an electrolyte solution. In the method for manufacturing a secondary battery according to another example, the battery may be manufactured by laminating the electrode assembly, immersing the laminate in an electrolyte solution, placing the resulting product in a battery case, and sealing the case.

As the battery case used in the present example embodiment, those commonly used in the art may be adopted, there is no limitation in appearance depending on the battery use, and for example, a cylindrical shape, an angled shape, a pouch shape, a coin shape, or the like using a can may be used.

The secondary battery according to the present example embodiment may be used in a battery cell used as a power supply of a small device, and also may be preferably used as a unit cell in a medium or large battery module including a plurality of battery cells. A preferred example of the medium or large device may include an electric automobile, a hybrid electric automobile, a plug-in hybrid electric automobile, a system for power storage, and the like, but is not limited thereto.

[Best Mode for Carrying Out the Invention]

Hereinafter, the examples of the present disclosure will be further described with reference to the specific experimental examples. It is apparent to those skilled in the art that the examples and the comparative examples included in the experimental examples only illustrate the present disclosure and do not limit the appended claims, and various modifications and alterations of the examples may be made within the range of the scope and spirit of the present disclosure, and these modifications and alterations will fall within the appended claims.

First, a method for evaluating physical properties will be described.

1) Solid content of electrode slurry

The weight ($W_1$) of an electrode slurry was measured using a precision scale, and then drying was performed for about 1 hour or more in a dry oven, and then the weight ($W_2$) was measured. The solid content was calculated according to the following equation:

$$\texttt{Solid content (\%) = } W_2/W_1 \texttt{ * 100}$$

2) Viscosity of electrode slurry

The electrode slurry viscosity was measured as a viscosity of an electrode slurry applied on the current collector with a shear rate of $1\ s^{-1}$ using a Brookfield rotational viscometer under room temperature and normal pressure conditions. The tolerance was $\pm100$ cP.

3) Average surface roughness Sa

The average surface roughness Sa was calculated as an average of surface roughness values measured in an observation area of width 20 mm $\times$ length 20 mm at 5 arbitrary points in the side part based on the width direction of the electrode active material layer, using a surface roughness measurement tool in a confocal microscope available from Keyence.

4) Number of Cracks

The number of cracks was measured as the number of cracks observed per unit area of 10 cm$^2$ of the side part of the electrode, using a confocal microscope available from Keyence.

The unit area of 10 cm$^2$ is an area of the width a and the length b of the side part and is calculated as a product of a and b, and the length b is determined dependently on the width a of the side part.

5) Maximum long diameter of crack

The maximum long diameter of a crack was measured using a length measurement tool in a confocal microscope available from Keyence.

6) Precipitation of lithium salt

A secondary battery was charged and discharged at a C-rate of 1/3 C at a temperature of 25°C. After a full charge, the secondary battery was disassembled, and precipitation of a lithium salt was confirmed at a crack position of an electrode. When the precipitation of a lithium salt in a large amount was confirmed, it was marked with "o", when the precipitation of a lithium salt in a small amount was confirmed, it was marked with "△", and when the precipitation of a lithium salt was not confirmed, it was marked with "×". Confirmation of the precipitation of a lithium salt in a larger amount means poor life characteristics.

**{Examples}**

Example 1

<Negative electrode>

Artificial graphite, a conductive material, a CMC thickener, and an SBR binder were added to water at a weight ratio of 94.8:2.5:1.2:1.5 to prepare a first negative electrode slurry having a solid content of 51 wt% and a second negative electrode slurry having a solid content of 49 wt%, respectively.

Thereafter, the first negative electrode slurry was applied to the center part using a slot die and the second negative electrode slurry was applied to the side part using a mini-slot die, based on the width direction, on one surface of a copper foil current collector having a thickness of 8 $\mu$m, and then drying was performed. The width of the side part was 7% based on the overall width length of the applied electrode slurry. The first negative electrode slurry and the second negative electrode slurry were applied in the same manner on the other surface of the copper foil current collector, and then dried. Thereafter, the drying-completed negative electrode was rolled under the rolling density of 1.68 g/cm$^{3}$ to manufacture a negative electrode in which a negative electrode active material layer was formed on the current collector.

<Positive electrode>

Li[Ni$_{0.88}$Co$_{0.1}$Mn$_{0.02}$]O$_2$ as a positive electrode active material, carbon black as a conductive material, and polyvinylidene fluoride (PVdF) as a binder were added to water at a weight ratio of 96.5:2:1.5 to prepare a positive electrode slurry. The positive electrode slurry was uniformly applied on an aluminum foil current collector having a thickness of 12 $\mu$m and dried under vacuum to manufacture a positive electrode.

<Secondary battery>

The positive electrode and the negative electrode manufactured above were laminated by notching at predetermined sizes, respectively, a separator (polyethylene, thickness: 13 $\mu$m) was interposed between the positive electrode and the negative electrode to form an electrode cell, and then tab parts of the positive electrode and the negative electrode were welded, respectively. An assembly of welded positive electrode/separator/negative electrode was placed in a pouch, and three sides except an electrolyte solution injection side were sealed. The electrolyte solution was injected through the remaining side excluding the sealed part, the remaining side was sealed, and impregnation was performed for 12 hours or more. As the electrolyte solution, 1M LiPF$_6$ was dissolved in a solvent of EC/EMC/DEC mixed at a volume ratio of 25:45:30, and then 1 wt% of vinylene carbonate (VC), 0.5 wt% of 1,3-propenesultone (PRS), and 0.5 wt% of lithium bis(oxalato)borate (LiBOB), based on the total weight of the electrolyte solution were added.

Thereafter, pre-charging was performed at a current corresponding to 0.25 C for 30 minutes. After 1 hour, degassing was performed, aging was performed for 24 hours or more, and then formation charge/discharge was performed (charge condition: CC-CV 0.2 C 4.2 V 0.05 C CUT-OFF, discharge condition: CC 0.2 C 2.5 V CUT-OFF). Thereafter, standard charge/discharge was performed (charge condition: CC-CV 0.33 C 4.2 V 0.05 C CUT-OFF, discharge condition: CC 0.33 C 2.5 V CUT-OFF).

Examples 2 and 3

A negative electrode, a positive electrode, and a secondary battery were manufactured in the same manner as in Example 1, except that the solid content We of the second negative electrode slurry applied to the side part was controlled to the solid content described in Table 1.

Examples 4 to 7

A negative electrode, a positive electrode, and a secondary battery were manufactured in the same manner as in Example 1, except that when the second negative electrode slurry was applied to the side part, the solid content ratio (We/Wc) described in Table 2 was applied to the side part.

Example 8

A negative electrode, a positive electrode, and a secondary battery were manufactured in the same manner as in Example 1, except that a discharge port facing to the center part was blocked with a shim and the second negative electrode slurry was applied to the side part based on the width direction, and the discharge port facing to the side part was blocked with a shim and the first negative electrode slurry was applied to the center part based on the width direction, using a dual-slot die coater, on a copper foil current collector having a thickness of 8 $\mu$m.

Comparative Example 1

A negative electrode, a positive electrode, and a secondary battery were manufactured in the same manner as in Example 1, except that the solid content We of the second negative electrode slurry applied to the side part was controlled to the solid content described in Table 1.

**[Experimental Example 1]: Characteristics of negative electrode depending on solid content of electrode slurry**

[Table 1]

| | Center part | | Side part | | We/Wc | Average surface roughness Sa ($\mu$m) | Negative electrode crack | | Precipitation of lithium salt |
|---|---|---|---|---|---|---|---|---|---|
| | Solid content Wc (wt%) | Viscosity Vc (cP) | Solid content We (wt%) | Viscosity Ve (cP) | | | Number of cracks (ea) | Maximum long diameter r (mm) | |
| Example 1 | 51 | 3,500 | 50 | 3,000 | 0.98 | 4.6 | 2 | < 5 | △ |
| Example 2 | 51 | 3,500 | 49 | 2,600 | 0.96 | 2.1 | 0 | - | × |
| Example 3 | 51 | 3,500 | 46 | 2,000 | 0.90 | 1.8 | 0 | - | × |
| Comparative Example 1 | 51 | 3,500 | 52 | 3,800 | 1.02 | 22.4 | 5 | 26 | ○ |

Hereinafter, evaluation was performed referring to the results of Table 1 and FIGS. 5 to 7. In FIGS. 5 to 7, cracks were shown in a dotted area.

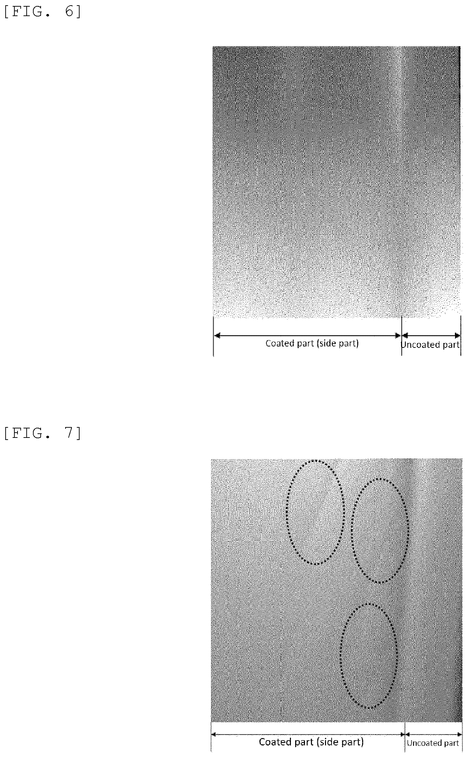

In Examples 1 to 3, as a result of satisfying the We/Wc value range defined in the present example embodiment, referring to Table 1 and FIGS. 5 and 6, cracks hardly occurred, or if they did, occurred slightly. In addition, in Examples 1 to 3, the average surface roughness Sa value was low at 5.0 $\mu$m or less, and since precipitation of the lithium salt was finely confirmed or was not confirmed, life characteristics were excellent.

Among Examples 1 to 3, in Examples 2 and 3, since no cracks occurred and the average surface roughness Sa value was also lower than that of Example 1, the surface quality was better, and since the lithium salt was not precipitated, the life characteristics were better.

However, in Comparative Example 1, the We/Wc value range defined in the present example embodiment was not satisfied, and as a result, referring to Table 1 and FIG. 7, a large amount of cracks occurred coarsely, since the average surface roughness Sa value was excessively large, the surface quality was poor, and since a large amount of the lithium salt was confirmed to be precipitated, the life characteristics were poor.

**[Experimental Example 2]: Characteristics of negative electrode depending on solid content ratio (We/Wc) of electrode slurry**

[Table 2]

| | We/Wc | Side part width (%) | Negative electrode crack | | Average surface roughness, Sa (μm) |
|---|---|---|---|---|---|
| | | | Number of cracks (ea) | Maximum long diameter (mm) | |
| Example 1 | 0.98 | 6 | 2 | < 5 | 4.6 |
| Example 4 | 0.98 | 10 | 1 | < 5 | 2.7 |
| Example 5 | 0.98 | 3 | 3 | 11 | 8.7 |
| Example 6 | 0.90 | 3 | 0 | 0 | < 2.0 |
| Example 7 | 0.88 | 3 | 0 | 0 | < 2.0 |

Referring to the results of Table 2, in Examples 1, 4, and 5 having the We/Wc value of 0.98, cracks did not occur in a larger side part width, but coarse cracks occurred as the side part width was narrower.

In Examples 6 and 7 having the We/Wc value of 0.90 or 0.88, cracks did not occur even in a range of a narrow side part width, and it was found that the difference in the drying rates of the electrode slurries applied to the side part and the center part was further decreased even in the range of a narrow side part width as compared with Examples 1, 4, and 5, so that the surface quality and productivity of the electrode were able to be further improved.

**[Experimental Example 3]: Characteristics of negative electrode depending on coating method of electrode slurry**

[Table 3]

| | Center part | | Side part | | We/Wc | Average surface roughness Sa (μm) | Negative electrode crack | | Precipitation of lithium salt |
|---|---|---|---|---|---|---|---|---|---|
| | Solid content Wc (wt%) | Viscosity Vc (cP) | Solid content We (wt%) | Viscosity Ve (cP) | | | Number of cracks (ea) | Maximum long diameter (mm) | |
| Example 1 | 51 | 3,500 | 50 | 3,000 | 0.98 | 4.6 | 2 | < 5 | △ |
| Example 8 | 51 | 3,500 | 50 | 3,000 | 0.98 | 5.2 | 3 | < 5 | △ |

Referring to the results of Table 3, when the first negative electrode slurry was applied to the center part using a slot die, and then the second negative electrode slurry was applied to the side part using a mini-slot die, as in Example 1, it was found that the average surface roughness Sa value was lower than that of Example 8 using a dual-slot die coater, so that surface quality, productivity, and life characteristics were better.

The above description is only an example to which the principle of the present disclosure is applied, and other constitutions may be further included without departing from the scope of the present disclosure.

**Claims**

1.  An electrode for a secondary battery comprising:

    a current collector; and
    an electrode active material layer placed on at least one surface of the current collector,
    wherein the following Relation 1 is satisfied:

[Relation 1]

$$Sa \leq 10.0$$

wherein Sa is an average surface roughness value ($\mu$m) of a side part based on a width direction of the electrode active material layer.

2. The electrode for a secondary battery of claim 1, wherein the number of cracks per unit area of 10 cm$^2$ of the side part based on the width direction of the electrode active material layer is less than 5.

3. The electrode for a secondary battery of claim 1, wherein a maximum long diameter of the crack in the side part based on the width direction of the electrode active material layer is less than 100 mm.

4. A method for manufacturing an electrode for a secondary battery, the method comprising:

   a) applying an electrode slurry on at least one surface of a current collector; and
   b) drying the applied electrode slurry,
   wherein the following Relation 2 is satisfied:

[Relation 2]

$$We/Wc < 1$$

   wherein Wc is a solid content of the electrode slurry applied to a center part, and We is a solid content of the electrode slurry applied to a side part, based on a width direction of the applied electrode slurry.

5. The method for manufacturing an electrode for a secondary battery of claim 4, wherein the We/Wc value of Relation 2 is 0.8 or more and less than 1.

6. The method for manufacturing an electrode for a secondary battery of claim 4, wherein the process a) includes:

   a1) preparing a first electrode slurry having a first solid content and a second electrode slurry having a second solid content lower than the first solid content; and
   a2) applying the first electrode slurry to the center part and applying the second electrode slurry to the side part, based on the width direction, on at least one surface of the current collector.

7. The method for manufacturing an electrode for a secondary battery of claim 6, wherein the process a2) includes:

   applying the first electrode slurry to the center part using a slot die and applying the second electrode slurry to the side part using a mini-slot die, based on the width direction, on at least one surface of the current collector; or
   applying the second electrode slurry to the side part and applying the first electrode slurry to the center part, using a dual-slot die coater, based on the width direction, on at least one surface of the current collector.

8. The method for manufacturing an electrode for a secondary battery of claim 4, wherein a width of the side part is 15% or less based on an overall width length of the applied electrode slurry.

9. The method for manufacturing an electrode for a secondary battery of claim 4, wherein the electrode slurries applied to the center part and the side part have the same composition.

10. The method for manufacturing an electrode for a secondary battery of claim 4, wherein the electrode slurry applied to the center part has a viscosity Vc of 1,000 to 10,000 cP.

11. The method for manufacturing an electrode for a secondary battery of claim 4, wherein the electrode slurry applied to the side part has a viscosity Ve of 1,000 to 6,000 cP.

12. The method for manufacturing an electrode for a secondary battery of claim 4, wherein the electrode slurries applied to the center part and the side part are applied at the same thickness.

13. A secondary battery comprising the electrode of any one of claims 1 to 3; a separator; and an electrolyte solution.

[FIG. 1]

coating running direction

[FIG. 2]

[FIG. 3]

Before drying

Coated part

Uncoated part

[FIG. 4]

After drying

[FIG. 5]

[FIG. 6]

Coated part (side part)    Uncoated part

[FIG. 7]

Coated part (side part)    Uncoated part

# INTERNATIONAL SEARCH REPORT

International application No.

**PCT/KR2023/010631**

**A. CLASSIFICATION OF SUBJECT MATTER**

**H01M 4/13**(2010.01)i; **H01M 4/04**(2006.01)i; **H01M 4/139**(2010.01)i; **H01M 10/0525**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/13(2010.01); H01M 10/052(2010.01); H01M 10/40(2006.01); H01M 2/02(2006.01); H01M 4/02(2006.01); H01M 4/131(2010.01); H01M 4/139(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이차전지(secondary battery), 전극(electrode), 가장자리부(edge portion), 중앙부 (center portion), 크랙(crack), 슬러리(slurry), 도포(coating), 점도(viscosity)

**C. DOCUMENTS CONSIDERED TO BE RELEVANT**

| Category* | Citation of document, with indication, where appropriate, of the relevant passages | Relevant to claim No. |
|---|---|---|
| Y | JP 2016-115567 A (NIPPON ZEON CO., LTD. et al.) 23 June 2016 (2016-06-23)<br>See paragraphs [0011]-[0026]; and figures 1-4. | 1-13 |
| Y | KR 10-2013-0116026 A (LG CHEM, LTD.) 22 October 2013 (2013-10-22)<br>See paragraphs [0010]-[0013], [0016]-[0020] and [0069]-[0072]; and figure 1. | 1-13 |
| A | KR 10-2021-0136842 A (LG ENERGY SOLUTION, LTD.) 17 November 2021 (2021-11-17)<br>See claims 1-15. | 1-13 |
| A | KR 10-2022-0054954 A (SK ON CO., LTD.) 03 May 2022 (2022-05-03)<br>See claims 1-14. | 1-13 |
| A | JP 2008-059876 A (HITACHI MAXWELL, LTD.) 13 March 2008 (2008-03-13)<br>See claims 1-4. | 1-13 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>**24 October 2023** | Date of mailing of the international search report<br>**24 October 2023** |
| Name and mailing address of the ISA/KR<br>**Korean Intellectual Property Office**<br>**Government Complex-Daejeon Building 4, 189 Cheongsa-ro, Seo-gu, Daejeon 35208** | Authorized officer |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2023/010631**

| Patent document cited in search report | | | Publication date (day/month/year) | Patent family member(s) | | | Publication date (day/month/year) |
|---|---|---|---|---|---|---|---|
| JP | 2016-115567 | A | 23 June 2016 | None | | | |
| KR | 10-2013-0116026 | A | 22 October 2013 | KR | 10-1514297 | B1 | 22 April 2015 |
| KR | 10-2021-0136842 | A | 17 November 2021 | CN | 114127987 | A | 01 March 2022 |
| | | | | EP | 3996168 | A1 | 11 May 2022 |
| | | | | JP | 2022-542843 | A | 07 October 2022 |
| | | | | JP | 7313536 | B2 | 24 July 2023 |
| | | | | US | 2022-0263062 | A1 | 18 August 2022 |
| | | | | WO | 2021-225316 | A1 | 11 November 2021 |
| KR | 10-2022-0054954 | A | 03 May 2022 | CN | 114497433 | A | 13 May 2022 |
| | | | | EP | 3989310 | A2 | 27 April 2022 |
| | | | | JP | 2022-070234 | A | 12 May 2022 |
| | | | | US | 2022-0131130 | A1 | 28 April 2022 |
| JP | 2008-059876 | A | 13 March 2008 | JP | 5348730 | B2 | 20 November 2013 |

Form PCT/ISA/210 (patent family annex) (July 2022)

**EP 4 525 067 A1**

**Patent documents cited in the description**

- KR 1020170100377